(19) Europäisches Patentamt

European Patent Office

Office européen des brevets

(11) Numéro de publication: **0 487 124 A1**

## (12) DEMANDE DE BREVET EUROPEEN

(21) Numéro de dépôt: **91202867.7**

(22) Date de dépôt: **05.11.91**

(51) Int. Cl.⁵: **C08L 27/06**, C08L 25/12,
C08L 33/24, //(C08L33/24,
55:02),(C08L25/12,51:04),
(C08L27/06,33:24,55:02),
(C08L27/06,25:12,51:04)

(30) Priorité: **16.11.90 BE 9001079**
**30.09.91 BE 9100901**

(43) Date de publication de la demande:
**27.05.92 Bulletin 92/22**

(84) Etats contractants désignés:
**AT BE CH DE DK ES FR GB GR IT LI LU NL SE**

(71) Demandeur: **SOLVAY (Société Anonyme)**
**Rue du Prince Albert, 33**
**B-1050 Bruxelles(BE)**

(72) Inventeur: **Bourseau, Bernard**
**Rue des Echevins, 59**
**B-1050 Bruxelles(BE)**
Inventeur: **Criquilion, Jean**
**Avenue Speeckaert, 77**
**B-1200 Bruxelles(BE)**

(74) Mandataire: **Marckx, Frieda et al**
**Solvay Département de la Propriété**
**Industrielle Rue de Ransbeek, 310**
**B-1120 Bruxelles(BE)**

(54) **Prémélanges gélifiés à base de polymères thermorésistants et compositions à base de polychlorure de vinyle contenant de tels prémélanges gélifiés.**

㊼ Prémélanges gélifiés à base de polymères thermorésistants dont le point de ramollissement Vicat est supérieur à 100 °C contenant un agent renforçant aux chocs et un lubrifiant du polychlorure de vinyle et compositions à base de polychlorure de vinyle contenant de tels prémélanges gélifiés. L'incorporation de polymères thermorésistants sous la forme de prémélanges gélifiés conduit à des compositions à base de polychlorure de vinyle parfaitement homogènes se transformant sans problème aux températures usuelles de mise en oeuvre du polychlorure de vinyle en articles façonnés à thermorésistance améliorée.

EP 0 487 124 A1

La présente invention concerne des prémélanges gélifiés à base de polymères thermorésistants, ainsi que des compositions à base de polychlorure de vinyle à thermorésistance améliorée contenant de tels prémélanges gélifiés.

Pour certaines applications des polymères du chlorure de vinyle exigeant une thermorésistance (ou température de déformation à la chaleur) accrue, il est impératif d'y incorporer avant mise en oeuvre un polymère à thermorésistance supérieure à celle du polychlorure de vinyle. La température de ramollissement Vicat (généralement désignée sous le vocable "température Vicat") du polychlorure de vinyle se situe aux environs de 70 à 80 °C. Par polymères thermorésistants, on entend désigner ci-après des polymères dont la température Vicat est supérieure à celle du polychlorure de vinyle et plus particulièrement supérieure à 100 °C. Les polyglutarimides et les copolymères de styrène et/ou d'α-méthylstyrène avec des nitriles et, éventuellement, des esters (méth)acryliques (communément désignés sous le vocable résines SAN) constituent des exemples bien connus de polymères utilisables pour améliorer la thermorésistance des polymères du chlorure de vinyle.

Malheureusement, la mise en oeuvre à l'état fondu de compositions à base de polychlorure de vinyle et de polymères dont le point Vicat est supérieur à celui du polychlorure de vinyle présente de très sérieux problèmes en raison de la trop grande différence de viscosité entre le polymère thermorésistant et le polychlorure de vinyle. Le problème est d'autant plus aigu que le polymère thermorésistant est efficace, c'est-à-dire présente une température Vicat élevée et, par ailleurs, que le poids moléculaire (ou le nombre K) du polychlorure de vinyle est faible. La mise en oeuvre de compositions à base de polychlorure de vinyle et de polymères thermorésistants, hors cisaillements intenses très néfastes pour la stabilité thermique du polychlorure de vinyle, peut conduire à des compositions manquant totalement d'homogénéité et ainsi à des objets façonnés dont les propriétés mécaniques, telles que la résistance aux chocs, même en présence d'agents anti-choc, sont très sérieusement altérées et le gain en thermorésistance insuffisant.

La présente invention procure des prémélanges gélifiés à base de polymères thermorésistants utilisables pour améliorer la thermorésistance du polychlorure de vinyle qui ne présentent aucun des inconvénients précités.

A cet effet, l'invention concerne des prémélanges gélifiés à base de polymères thermorésistants dont la température de ramollissement Vicat (50N) est supérieure à 100 °C, caractérisés en ce qu'ils contiennent un agent renforçant aux chocs et un agent lubrifiant du polychlorure de vinyle.

La température de ramollissement Vicat (50N) peut être mesurée selon l'une quelconque des normes ASTM D 1525, DIN 53460 ou ISO 306.

L'invention concerne également des compositions à base de polychlorure de vinyle et de polymères thermorésistants, caractérisées en ce qu'elles comprennent un prémélange gélifié à base de polymère thermorésistant contenant un agent renforçant aux chocs et un agent lubrifiant du polychlorure de vinyle.

L'incorporation dans le polychlorure de vinyle de polymères thermorésistants sous la forme d'un prémélange gélifié selon l'invention conduit à des compositions à base de polychlorure de vinyle parfaitement homogènes qui se laissent transformer sans problème aux températures usuelles de mise en oeuvre du polychlorure de vinyle en articles façonnés à thermorésistance améliorée.

Par polychlorure de vinyle, on entend désigner aux fins de la présente invention aussi bien les homopolymères que les copolymères du chlorure de vinyle contenant au moins 80 % en poids d'unités monomériques dérivées du chlorure de vinyle et leurs mélanges. On donne néanmoins la préférence aux homopolymères du chlorure de vinyle.

Comme déjà précisé plus haut, on entend désigner par polymère thermorésistant les polymères dont la température de ramollissement Vicat (50N) est supérieure à 100 °C. On donne la préférence aux polymères dont la température de ramollissement Vicat (50N) est supérieure à 110 °C et ne dépasse pas, par ailleurs, 150 °C.

A titre d'exemples non limitatifs de polymères thermorésistants utilisables dans le cadre de la présente invention, on peut mentionner les copolymères de styrène et d'anhydride maléique, les copolymères de styrène et de méthacrylate de méthyle, les copolymères d'acrylonitrile, de butadiène, de styrène et d'α-méthylstyrène communément appelés résines ABS "chaleur", les polyglutarimides, ainsi que les copolymères de styrène et/ou d'α-méthylstyrène et de nitriles (méth)acryliques et, éventuellement, d'esters (méth)-acryliques généralement désignés sous le vocable "résines SAN".

Des polymères thermorésistants particulièrement préférés selon la présente invention sont les polyglutarimides et les résines SAN. Des polyglutarimides utilisables selon la présente invention sont décrits, par exemple, dans les brevets BE-A-848 486 du 18 novembre 1976 et US-A-4 246 374 du 23 avril 1979, tous deux au nom de Rohm & Haas. Des résines SAN utilisables selon la présente invention sont décrites, par exemple, dans les brevets FR-A-1 047 954 au nom de The Goodrich Co et US-A-4 169 195 au nom de Borg Warner Corp.

2

Parmi les polyglutarimides, on donne la préférence aux poly-N-alkylglutarimides dont les groupements alkyles contiennent de 1 à 20 atomes de carbone et plus particulièrement encore aux poly-N-méthylglutarimides. Parmi les résines SAN, on donne la préférence aux copolymères de styrène et/ou d'α-méthylstyrène et de nitrile acrylique, plus particulièrement, aux copolymères de styrène et/ou d'α-méthylstyrène contenant de 5 à 50 % en poids de nitrile acrylique et plus particulièrement encore à de tels copolymères contenant de 15 à 40 % en poids de nitrile acrylique.

Par prémélanges gélifiés à base de polymère thermorésistant, on entend désigner des prémélanges ayant été soumis à une opération de malaxage à une température supérieure à la température de transition vitreuse du polymère thermorésistant, opération couramment désignée par le vocable anglais "compoundage".

L'invention résulte de la constatation surprenante que la prégélification du polymère thermorésistant en présence d'un agent renforçant aux chocs du polychlorure de vinyle et d'un agent lubrifiant du polychlorure de vinyle abaisse la cohésion et la viscosité du polymère thermorésistant à tel point qu'il devient possible de produire des compositions à base de polychlorure de vinyle et de polymère thermorésistant qui se laissent mettre en oeuvre sans problème dans les conditions de température usuelles du polychlorure de vinyle, même aux températures réduites auxquelles il convient de mettre en oeuvre des polychlorures de vinyle de faible nombre K, tels que ceux plus particulièrement destinés au moulage par injection.

Les agents renforçant aux chocs, ci-après désignés par le vocable "agents antichoc", qui conviennent pour préparer les prémélanges gélifiés à base de polymère thermorésistant selon l'invention peuvent être choisis indifféremment parmi tous les agents antichoc usuels du polychlorure de vinyle. A titre d'exemples non limitatifs de pareils agents antichoc, on peut mentionner les copolymères de méthacrylate de méthyle-butadiène-styrène, communément appelés résines MBS, les copolymères d'acrylonitrile-butadiène-styrène, communément appelés résines ABS, les polyéthylènes chlorés, les résines acryliques antichoc, les copolymères d'acétate de vinyle et d'éthylène et les copolymères greffés de chlorure de vinyle sur des copolymères d'acétate de vinyle et d'éthylène et leurs mélanges. De préférence, l'agent antichoc est choisi parmi les résines MBS, les résines ABS et les résines acryliques antichoc (et leurs mélanges).

La quantité d'agent antichoc utilisée dans les prémélanges gélifiés à base de polymère thermorésistant n'est pas particulièrement critique. La quantité optimale sera avantageusement évaluée par voie expérimentale dans chaque cas particulier. Pour fixer les idées, il est généralement préférable d'en utiliser au moins 2 parties pour 100 parties en poids de polymère thermorésistant, plus particulièrement au moins 5 parties et, plus particulièrement encore au moins 10 parties. Dans le cas où l'on cherche à produire en finale des articles façonnés en polychlorure de vinyle thermorésistants à résistance aux chocs élevée, on peut incorporer sans inconvénient des quantités plus élevées d'agent antichoc dans le prémélange gélifié à base de polymère thermorésistant. En règle générale, on ne dépassera toutefois pas une concentration en agent antichoc de 200 parties pour 100 parties en poids de polymère thermorésistant, une zone de concentrations préférée allant de 25 à 150 parties d'agent antichoc pour 100 parties en poids de polymère thermorésistant.

Les agents lubrifiants utilisables pour fabriquer les prémélanges gélifiés selon l'invention peuvent être choisis indifféremment parmi tous les agents lubrifiants usuels du polychlorure de vinyle, c'est-à-dire les agents lubrifiants dits externes, en ce compris les agents de mise en oeuvre ("processing aid") à caractère lubrifiant externe et les agents lubrifiants dits internes, en ce compris les agents abaisseurs de viscosité à caractère lubrifiant interne.

Le caractère lubrifiant externe est généralement attribué aux lubrifiants peu polaires et peu compatibles avec le polychlorure de vinyle dont la fonction essentielle consiste à empêcher son adhésion sur les surfaces métalliques chaudes des appareillages utilisés pour sa transfomation à l'état fondu. A titre d'exemples non limitatifs de pareils agents lubrifiants externes du polychlorure de vinyle, on peut mentionner les cires de polyéthylène, les cires de polyéthylène oxydées, les paraffines à longues chaînes linéaires ou à plus courtes chaînes ramifiées, ainsi que les agents de mise en oeuvre à caractère lubrifiant externe, tels que les agents de mise en oeuvre acryliques, et leurs mélanges. Des agents lubrifiants externes préférés dans le cadre de la présente invention sont les agents de mise en oeuvre acryliques.

Le caractère lubrifiant interne est généralement attribué aux lubrifiants polaires et relativement compatibles avec le polychlorure de vinyle dont la fonction essentielle consiste à modifier les forces cohésives des chaînes polymériques du polychlorure de vinyle. A titre d'exemples non limitatifs de pareils agents lubrifiants internes du polychlorure de vinyle, on peut mentionner les monoesters en C14 à C18 de la glycérine, les alcools gras en C14 à C18, les acides gras et leurs sels, les amides dérivés d'acides gras, les huiles hydrogénées, ainsi que les abaisseurs de viscosité tels que les polyols aliphatiques et leurs oligomères et leurs mélanges.

Suivant un mode de réalisation particulièrement préféré de la présente invention, le prémélange gélifié à base de polymère thermorésistant comprend au moins un agent lubrifiant interne tel que défini ci-dessus.

Des agents lubrifiants internes préférés dans le cadre de la présente invention sont les monoesters de la glycérine (tels que, par exemple, le monostéarate de glycérol), les amides dérivés d'acides gras (tels que, par exemple, l'éthylènedistéaramide), les sels d'acides gras (tels que, par exemple, les stéarates de calcium ou de plomb) et les polyols aliphatiques abaisseurs de viscosité (tels que, par exemple, le ditriméthylolpropane).

La quantité d'agent lubrifiant du polychlorure de vinyle, tel que défini ci-dessus, utilisée dans les prémélanges gélifiés selon l'invention n'est pas particulièrement critique non plus. La quantité optimale sera également avantageusement évaluée par voie expérimentale. Pour fixer les idées, il est généralement préférable d'en utiliser au moins 5 parties pour 100 parties en poids de polymère thermorésistant et plus particulièrement encore au moins 10 parties. Habituellement, la quantité d'agent lubrifiant ne dépassera pas 75 parties en poids pour 100 parties de polymère thermorésistant, une zone de concentrations généralement préférée allant de 15 à 50 parties en poids.

Des prémélanges gélifiés préférés comprennent donc pour 100 parties en poids de polymère thermorésistant, de 25 à 150 parties d'agent antichoc (ou d'un mélange d'agents antichoc) du polychlorure de vinyle et de 15 à 50 parties en poids d'agent lubrifiant (ou d'un mélange d'agents lubrifiants) du polychlorure de vinyle.

La gélification des prémélanges à base de polymère thermorésistant, d'agent renforçant aux chocs et d'agent lubrifiant du polychlorure de vinyle s'effectue de manière connue, par exemple, par extrusion ou par malaxage dans un malaxeur interne des ingrédients du prémélange à des températures supérieures à la température de transition vitreuse du polymère thermorésistant. Les joncs extrudés et les feuilles calandrées par passage sur cylindres de la matière gélifiée dans le malaxeur interne sont ensuite soumis à une opération de granulation. Ces granules peuvent être incorporés tels quels ou après broyage au polychlorure de vinyle en vue de la préparation de compositions à base de polychlorure de vinyle à thermorésistance améliorée.

L'invention concerne également des compositions à base de polychlorure de vinyle et de polymère thermorésistant dans lesquelles le polymère thermorésistant est présent sous la forme d'un prémélange gélifié à base de polymère thermorésistant, d'agent antichoc et d'agent lubrifiant du polychlorure de vinyle tel que décrit ci-dessus. Ces compositions sont fabriquées par mélange, selon des techniques de mélange conventionnelles, du prémélange gélifié à base de polymère thermorésistant, sous la forme de granules ou de poudres (granules micronisés), avec le polychlorure de vinyle et ses ingrédients usuels de mise en oeuvre, tels que des stabilisants thermiques, des lubrifiants, des charges, des pigments, etc. Il est entendu que pour la formulation du polychlorure de vinyle, on tiendra compte des quantités d'agent antichoc et de lubrifiant déjà présentes dans le prémélange à base de polymère thermorésistant.

La teneur en polymère thermorésistant des compositions à base de polychlorure de vinyle dépendra bien entendu du niveau de thermorésistance recherché. Pour fixer les idées, les compositions à base de polychlorure de vinyle et de polymère thermorésistant comprennent, en général, de 98 à 40 parties de polychlorure de vinyle pour 2 à 60 parties en poids de polymère thermorésistant et, plus particulièrement, de 90 à 50 parties de polychlorure de vinyle pour 10 à 50 parties en poids de polymère thermorésistant.

Des compositions thermorésistantes tout particulièrement préférées selon la présente invention contiennent à titre de polychlorure de vinyle un homopolymère du chlorure de vinyle dont le nombre K est inférieur à 65 et plus particulièrement encore inférieur à 55.

Les compositions à base de polychlorure de vinyle et de polymère thermorésistant selon l'invention conviennent particulièrement pour le façonnage d'articles en polychlorure de vinyle devant subir des sollicitations thermiques et mécaniques importantes, tels que par exemple les emballages remplissables à chaud, les profilés foncés pour châssis extérieurs ou encore certaines pièces injectées. Elles conviennent tout particulièrement pour le moulage par injection d'articles en polychlorure de vinyle thermorésistants, renforcés aux chocs, tels que des pièces pour la bureautique, des coffrets et des boîtiers électriques, des habillages d'appareils électroménagers etc.

Les exemples qui suivent sont destinés à illustrer l'invention. Toutes les quantités sont exprimées en poids.

L'exemple 1, selon l'invention, concerne un prémélange gélifié à base de résine SAN, ainsi qu'une composition à base de polychlorure de vinyle et dudit prémélange gélifié à base de résine SAN.

Les exemples 2 et 3, donnés à titre comparatif, concernent des compositions à base de polychlorure de vinyle et de résine SAN de composition pondérale identique à celle de l'exemple 1. Dans l'exemple 2, la composition est obtenue par mélange en une étape de tous les ingrédients. Dans l'exemple 3, la composition est obtenue par mélange du polychlorure de vinyle et de ses ingrédients de mise en oeuvre (contenant la totalité de l'agent lubrifiant) avec un prémélange gélifié à base de résine SAN et d'agent antichoc exempt d'agent lubrifiant.

L'exemple 4, selon l'invention, concerne un prémélange gélifié à base de poly-N-glutarimide, ainsi qu'une composition à base de polychlorure de vinyle et dudit prémélange gélifié à base de poly-N-glutarimide contenant un agent antichoc acrylique.

L'exemple 5, donné à titre comparatif, concerne une composition à base de polychlorure de vinyle et de poly-N-glutarimide de composition pondérale identique à celle de l'exemple 4 obtenue par mélange de tous les ingrédients en une étape.

L'exemple 6, selon l'invention, concerne un prémélange gélifié à base de poly-N-glutarimide, ainsi qu'une composition à base de polychlorure de vinyle et dudit prémélange gélifié à base de poly-N-glutarimide contenant un agent antichoc du type MBS.

L'exemple 7, donné à titre comparatif, concerne une composition à base de polychlorure de vinyle et de poly-N-glutarimide de composition pondérale identique à celle de l'exemple 6 obtenue par mélange de tous les ingrédients en une étape.

L'exemple 8, donné à titre comparatif, concerne une composition à base de polychlorure de vinyle et de poly-N-glutarimide de composition pondérale identique à celle de l'exemple 6 obtenue par mélange du polychlorure de vinyle et de ses ingrédients de mise en oeuvre (contenant la totalité de l'agent lubrifiant) avec un prémélange gélifié à base de poly-N-glutarimide et d'agent antichoc exempt d'agent lubrifiant.

Exemple 1

1. Prémélange gélifié à base de résine SAN

Dans un mélangeur lent, on mélange pendant 20 minutes sans élévation de la température, les ingrédients suivants dans les proportions suivantes :

| | |
|---|---|
| - Résine SAN (commercialisée par MONSANTO sous la marque ELIX 230 B) dont la température Vicat (50N) s'élève à 116 °C | 29 |
| - Agent antichoc ABS (commercialisé par MONSANTO sous la marque ELIX 104 C) | 16 |
| - Agent antichoc acrylique (commercialisé par ROHM & HAAS sous la marque KM 355) | 3 |
| - Antioxydant (mélange 1.1) | 0,25 |

Selon une procédure identique, on mélange par ailleurs les ingrédients suivants :

| | |
|---|---|
| - Stéarate de calcium | 2 |
| - Ethylènedistéaramide | 2,5 |
| - Agent de mise en oeuvre acrylique (commercialisé par ROHM & HAAS sous la marque PARALOID K 175) | 1 |
| - Ditriméthylolpropane (mélange 1.2) | 1,5 |

Le mélange 1.1 (agents thermorésistant et antichoc) est gélifié sur un malaxeur interne jusqu'à la prise en masse (laquelle a lieu aux environs de 165 °C), moment à partir duquel on incorpore le mélange 1.2 (lubrifiants) et on continue à chauffer jusqu'à atteindre la température de 180 °C, après quoi on décharge. Le crêpe obtenu est ensuite malaxé pendant 2 minutes à 150 °C, puis granulé après refroidissement.

2. Composition à base de polychlorure de vinyle et de résine SAN

Dans un mélangeur rapide dans lequel la matière s'échauffe par friction jusqu'à 110 °C, on mélange les ingrédients suivants dans les proportions suivantes :

| | |
|---|---|
| - Polychlorure de vinyle (nombre K 50) | 65 |
| - Stabilisant à l'étain | 1,6 |
| - Carbonate de calcium précipité | 5 |
| - Oxyde de titane (mélange 2) | 2 |

Dès que la matière atteint 110 °C, on décharge le mélange résultant dans un mélangeur refroidisseur que l'on décharge lorsque la température a atteint 40 °C.

On alimente une extrudeuse à deux vis corotatives classiques avec un mélange constitué de la totalité du prémélange gélifié obtenu sous le point 1 et de la totalité du mélange à base de polychlorure de vinyle obtenu sous le point 2 dans laquelle la matière est gélifiée à 180 °C. La composition gélifiée résultante est granulée après refroidissement.

Exemple 2 (comparatif)

On mélange en une étape l'ensemble des ingrédients du prémélange à base de résine SAN (point 1) et de la composition à base de polychlorure de vinyle (point 2) de l'exemple 1 et on gélifie ce mélange par extrusion, puis on granule le mélange gélifié dans des conditions identiques à celles de l'exemple 1, point 2.

Exemple 3 (comparatif)

On prépare un prémélange gélifié comprenant exclusivement les ingrédients du mélange 1.1 (résine SAN et agents antichoc) de l'exemple 1 dans des conditions identiques à celles de l'exemple 1, point 1. Par ailleurs, on prépare un second mélange contenant tous les ingrédients du mélange 1.2 (c'est-à-dire, les lubrifiants), ainsi que la composition à base de polychlorure de vinyle (mélange 2). Le prémélange gélifié et le mélange de lubrifiants (mélange 1.2.) et de la composition à base de polychlorure de vinyle (mélange 2) sont mélangés, gélifiés et granulés dans des conditions identiques à celles de l'exemple 1, point 2.

Evaluation des propriétés d'éprouvettes injectées à partir de granules obtenus selon les exemples 1 à 3 - (Tableau 1)

A partir des granules obtenus selon les exemples 1, 2 et 3, on a moulé par injection à 200 °C deux séries d'éprouvettes. Sur la première série, d'une épaisseur de 3,2 mm, on a évalué la résilience IZOD entaillée à 23 °C selon la norme ISO 180. Sur la seconde série, d'une épaisseur de 6 mm, on a évalué la température de ramollissement Vicat (50N) selon la norme ISO 306.

Les résultats des évaluations figurent au Tableau 1. La comparaison de ces résultats montre l'amélioration très appréciable de la résilience IZOD, témoin d'une homogénéité largement supérieure, des échantillons selon l'invention (exemple 1) par comparaison avec des échantillons de composition identique obtenus par mélange en une étape de tous les ingrédients (exemple 2, comparatif) ou encore par recours à un prémélange gélifié contenant le polymère thermorésistant et des agents antichoc mais exempt d'agent(s) lubrifiant(s)(exemple 3, comparatif).

Exemple 4

1. Prémélange gélifié à base de polyglutarimide

Dans un mélangeur lent, on mélange pendant 20 minutes sans élévation de la température les ingrédients suivants dans les proportions suivantes :

| | |
|---|---|
| - Poly-N-méthylglutarimide (commercialisé par ROHM & HAAS sous la marque PARALOID HT 510) | 12 |
| - Agent antichoc acrylique (commercialisé par ROHM & HAAS sous la marque PARALOID KM 323 B) | 15 |
| - Agent de mise en oeuvre acrylique (commercialisé par ROHM & HAAS sous la marque PARALOID K 175) | 1,25 |
| - Stéarate neutre de plomb (mélange 4.1) | 2,5 |

Ce mélange est gélifié par passage dans un malaxeur interne et déchargé lorsque la température du mélange atteint 230 °C. La matière déchargée est granulée après formation d'un crêpe sur un malaxeur à cylindres à 180 °C.

2. Composition à base de polychlorure de vinyle et de polyglutarimide

Dans un mélangeur rapide dans laquelle la matière s'échauffe par friction jusqu'à 110 °C, on mélange les ingrédients suivants dans les proportions suivantes :

| | |
|---|---|
| - Polychlorure de vinyle (nombre K 60) | 100 |
| - Stabilisant au plomb(tribase) | 7 |
| - Lubrifiants externes (cires) | 0,8 |
| - Stéarate de calcium | 0,5 |
| - Agent de mise en oeuvre acrylique | 1 |
| - Dioxyde de titane (mélange 4.2) | 5,6 |

Dès que la matière atteint la température de 110 °C, on décharge le mélange résultant dans un mélangeur refroidisseur, on y introduit la totalité du prémélange gélifié obtenu sous le point 1 et on mélange le tout à faible vitesse en refroidissant jusqu'à 40 °C.

La composition résultante est ensuite gélifiée par passage dans un malaxeur interne avec décharge lorsque la température de la matière atteint 185 °C. Cette matière est mise sous la forme d'un crêpe par passage sur un malaxeur à cylindres à 180 °C et est ensuite granulée après refroidissement.

Exemple 5 (comparatif)

On mélange en une étape l'ensemble des ingrédients du prémélange à base de poly-N-glutarimide (mélange 4.1) et de la composition à base de polychlorure de vinyle (mélange 4.2) de l'exemple 4 et on gélifie par extrusion, puis on granule le mélange gélifié dans des conditions identiques à celles de l'exemple 4, point 2.

Evaluation des propriétés d'éprouvettes injectées à partir de granules obtenus selon les exemples 4 et 5 - (Tableau 2)

A partir des granules obtenus selon les exemples 4 et 5, on a fabriqué par injection-moulage à 205 °C des coffrets (boîtes) de dérivation de connections électriques. Sur une face d'une épaisseur de 2,5 mm, on a pratiqué un test de choc par chute de poids (50N à 23 °C) selon la norme NFC 20 010. La hauteur en mètres correspondant à la casse de 50 % des échantillons (H50) est supérieure à 2,2 m pour les échantillons selon l'exemple 4 et est égale à 0,2 m pour les échantillons selon l'exemple 5, de comparaison. La comparaison des résultats montre à suffisance l'amélioration appréciable de la résistance au choc et donc de l'homogénéité obtenues avec les compositions à base de prémélanges gélifiés selon l'invention (exemple 4).

Exemple 6

1. Prémélange gélifié à base de polyglutarimide

Dans un mélangeur lent, on mélange pendant 20 minutes sans élévation de la température, les ingrédients suivants dans les proportions suivantes :

| | |
|---|---|
| - Poly-N-méthylglutarimide (commercialisé par ROHM & HAAS sous la marque PARALOID HT 510) | 20 |
| - Agent antichoc MBS | 10 |
| - Agent de mise en oeuvre acrylique (commercialisé par ROHM & HAAS sous la marque PARALOID K 175) | 2 |
| - Lubrifiant interne (monostéarate de glycérol) (mélange 6.1) | 2 |

Ce mélange est ensuite gélifié à 200 °C sur une extrudeuse à deux vis corotatives classiques, puis refroidi et granulé.

2. Composition à base de polychlorure de vinyle et de polyglutarimide

Dans un mélangeur rapide dans laquelle la matière s'échauffe par friction jusqu'à 110 °C, on mélange les ingrédients suivants dans les proportions suivantes :

| | |
|---|---|
| - Polychlorure de vinyle (nombre K 50) | 100 |
| - Stabilisant à l'étain | 3 |
| - Lubrifiant externe (mélange 6.2) | 0,5 |

Dès que la matière atteint la température de 110 °C, on décharge le mélange résultant dans un mélangeur refroidisseur et l'on décharge le mélange lorsque la température atteint 40 °C.

On alimente une extrudeuse à deux vis corotatives classiques avec un mélange constitué de la totalité du prémélange gélifié obtenu sous le point 1 et de la totalité du mélange à base de polychlorure de vinyle obtenu sous le point 2 dans laquelle la matière est gélifiée à 170 °C. La composition gélifiée résultante est ensuite granulée après refroidissement.

Exemple 7 (comparatif)

On mélange en une étape l'ensemble des ingrédients du prémélange à base de poly-N-glutarimide (mélange 6.1) et de la composition à base de polychlorure de vinyle (mélange 6.2) de l'exemple 6 et on gélifie le mélange par extrusion, puis on granule le mélange gélifié dans des conditions identiques à celles de l'exemple 6, point 2.

Exemple 8 (comparatif)

On prépare un prémélange gélifié comprenant exclusivement le poly-N-glutarimide et l'agent antichoc MBS du mélange 6.1 de l'exemple 6 dans des conditions identiques à celles de l'exemple 6, point 1. Par ailleurs, on prépare un second mélange contenant tous les autres ingrédients du mélange 6.1 (i.e. l'agent de mise en oeuvre acrylique et le lubrifiant interne), ainsi que la composition à base de polychlorure de vinyle (mélange 6.2). Le prémélange gélifié et le mélange de lubrifiants et de la composition à base de polychlorure de vinyle (mélange 6.2) sont mélangés, gélifiés et granulés dans des conditions identiques à celles de l'exemple 6, point 2.

Evaluation des propriétés d'éprouvettes injectées à partir de granules obtenus selon les exemples 6 à 8

A partir des granules obtenus selon les exemples 6, 7 et 8, on a fabriqué par moulage par injection-moulage à 200 °C des plaques de 2,2 mm d'épaisseur sur lesquelles on a pratiqué un test de choc par chute de poids à 23 °C selon la norme ASTM D 4226.

L'énergie moyenne de rupture correspondant à la casse de 50 % des échantillons (E50) est égale à 3,18 J/mm pour les échantillons selon l'exemple 6, à 1,56 J/mm pour les échantillons selon l'exemple 7 et à 2,56 J/mm pour les échantillons selon l'exemple 8. La comparaison des résultats montre l'amélioration non négligeable de la résistance au choc et donc de l'homogénéité des échantillons selon l'invention (exemple 6) par comparaison avec des échantillons de composition identique obtenus par mélange en une étape de tous les ingrédients (exemple 7, comparatif) ou encore par recours à un prémélange gélifié contenant le polymère thermorésistant et l'agent antichoc mais exempt d'agent(s) lubrifiant(s) (exemple 8, comparatif).

Tableau 1

| Nº de l'exemple | Résilience IZOD entaillée, kJ/m2 | Vicat (50N) °C |
|---|---|---|
| 1 | 34,2 | 82 |
| 2 | 8,7 | 79 |
| 3 | 16,9 | 80 |

**Revendications**

1. Prémélanges gélifiés à base de polymères thermorésistants dont la température de ramollissement Vicat (50N) est supérieure à 100 °C, caractérisés en ce qu'ils contiennent un agent renforçant aux chocs et un agent lubrifiant du polychlorure de vinyle.

2. Prémélanges gélifiés selon la revendication 1, caractérisés en ce que l'agent renforçant aux chocs est choisi parmi les copolymères de méthacrylate de méthyle-butadiène-styrène (résines MBS), les copolymères d'acrylonitrile-butadiène-styrène (résines ABS) et les résines acryliques antichoc et leurs mélanges.

3. Prémélanges gélifiés selon l'une quelconque des revendications 1 et 2, caractérisés en ce que l'agent renforçant aux chocs est utilisé à raison de 2 parties au moins et de 200 parties au plus pour 100 parties en poids de polymère thermorésistant.

4. Prémélanges gélifiés selon la revendication 1, caractérisés en ce que l'agent lubrifiant comprend au moins un agent lubrifiant interne du polychlorure de vinyle.

5. Prémélanges gélifiés selon la revendication 4, caractérisés en ce que l'agent lubrifiant interne est choisi parmi les monoesters de la glycérine, les amides dérivés d'acides gras, les sels d'acides gras et les polyols aliphatiques et leurs mélanges.

6. Prémélanges gélifiés selon l'une quelconque des revendications 1, 4 et 5, caractérisés en ce que l'agent lubrifiant est utilisé à raison de 5 parties au moins et de 75 parties au plus pour 100 parties en poids de polymère thermorésistant.

7. Prémélanges gélifiés selon la revendication 1, caractérisés en ce que le polymère thermorésistant est choisi parmi les copolymères de styrène et d'anhydride maléique, les copolymères de styrène et de méthacrylate de méthyle, les copolymères d'acrylonitrile, de butadiène, de styrène et d'$\alpha$-méthylstyrène, les polyglutarimides et les copolymères de styrène et/ou d'$\alpha$-méthylstyrène et de nitriles (méth)-acryliques et, éventuellement, d'esters (méth)acryliques .

8. Prémélanges gélifiés selon l'une quelconque des revendication 1 et 7, caractérisés en ce que le polymère thermorésistant est choisi parmi les poly-N-alkylglutarimides dont les groupements alkyles contiennent de 1 à 20 atomes de carbone et les copolymères de styrène et/ou d'$\alpha$-méthylstyrène et de nitrile acrylique.

9. Prémélanges gélifiés selon l'une quelconque des revendication 1 et 8, caractérisés en ce que le polymère thermorésistant est choisi parmi les poly-N-méthylglutarimides et les copolymères de styrène et/ou $\alpha$-méthylstyrène contenant de 5 à 50 % en poids de nitrile acrylique.

10. Compositions à base de polychlorure de vinyle et de polymère thermorésistant, caractérisées en ce qu'elles contiennent un prémélange gélifié à base de polymère thermorésistant selon l'une quelconque des revendications 1 à 9.

11. Compositions selon la revendication 10, caractérisées en ce qu'elles comprennent de 98 à 40 parties de polychlorure de vinyle pour 2 à 60 parties en poids de polymère thermorésistant.

12. Compositions selon la revendication 11, caractérisées en ce que le polychlorure de vinyle est un homopolymère du chlorure de vinyle présentant un nombre K inférieur à 65.

Office européen
des brevets

**RAPPORT DE RECHERCHE EUROPEENNE**

Numero de la demande

EP    91 20 2867

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-B-1 222 249 (FARBENFABRIKEN BAYER AG) <br> * revendication 1 * <br> --- | 1,3-9 | C08L27/06 <br> C08L25/12 <br> C08L33/24 <br> //(C08L33/24,55: <br> D2)(C08L25/12,51 <br> :04)(C08L27/06,3 <br> 3:24,55:02)(C08L <br> 27/06,25:12,51:0 <br> 4) |
| X | FR-A-2 312 537 (BORG-WARNER CORP) <br> * page 4, ligne 36 - ligne 38 * <br> * page 3, ligne 30 - ligne 32; revendications 1-3; tableau 1 * <br> --- | 1-5 | |
| X | GB-A-1 084 594 (MONSANTO COMPANY) <br> * page 4, ligne 67 - ligne 71; revendications 1,9 * <br> --- | 1,3 | |
| X | FR-A-2 073 617 (NITTO CHEMICAL KK, MITSUBISHI RAYON KK) <br> * revendications 1,2,4; exemple 18 * <br> --- | 1,3 | |
| A | EP-A-0 035 341 (ROHM AND HAAS COMP) <br> * exemple 8 * <br> --- | 10-12 | |
| A | US-A-4 595 727 (DOAK) <br> * colonne 7, ligne 57 - colonne 8, ligne 7 * <br> ----- | 1,10 | |

**DOMAINES TECHNIQUES RECHERCHES (Int. Cl.5 )**

C08L

Le présent rapport a été établi pour toutes les revendications

| Lieu de la recherche | Date d'achèvement de la recherche | Examinateur |
|---|---|---|
| LA HAYE | 03 MARS 1992 | D. SCHULER |